# EUROPÄISCHE PATENTSCHRIFT

(11) **EP 1 242 176 B1**
(45) Veröffentlichungstag und Bekanntmachung des Hinweises auf die Patenterteilung: **30.03.2005**
(21) Anmeldenummer: 00983296.5
(22) Anmeldetag: 12.12.2000
(51) Int. Cl.: B01J 19/00, B01J 37/34

(54) **VERFAHREN ZUR HERSTELLUNG VON MATERIALBIBLIOTHEKEN DURCH ELEKTROCHEMISCHE ABSCHEIDUNG**
METHOD FOR PRODUCING MATERIAL LIBRARIES BY MEANS OF ELECTROCHEMICAL DEPOSITION
PROCEDE POUR LA PRODUCTION DE BIBLIOTHEQUES DE MATERIAUX PAR DEPOSITION ELECTROCHIMIQUE

(30) Priorität: 13.12.1999 DE 19959974
(43) Veröffentlichungstag der Anmeldung: 25.09.2002
(73) Patentinhaber: hte Aktiengesellschaft the high throughput experimentation company, 69123 Heidelberg (DE)
(72) Erfinder: SCHUNK, Stephan, 69115 Heidelberg (DE); DEMUTH, Dirk, 68161 Mannheim (DE); HIBST, Hartmut, 69198 Schriesheim (DE)
(74) Vertreter: Ricker, Mathias, Dr.
(86) Internationale Anmeldenummer: PCT/EP2000/012601
(87) Internationale Veröffentlichungsnummer: WO 2001/043866

(56) Entgegenhaltungen:
- WO-A-97/32208
- WO-A-98/14641
- WO-A-99/19724
- WO-A-99/41005
- DE-A- 19 855 894
- US-A- 4 099 923
- US-A- 5 929 208

## Beschreibung

Die vorliegende Erfindung betrifft Verfahren zur kombinatorischen Herstellung einer Bibliothek von Materialien durch elektrochemische Abscheidung.

Die parallelisierte Herstellung und Testung von Materialien mit geeigneten physikalischen oder chemischen Eigenschaften ist ein Gebiet in der Materialforschung, das gegenwärtig stark an Beachtung gewinnt.

In der DE-A-198 55 894 wird z.B. zur kombinatorischen Herstellung und Testung von Katalysatoren ein Array aus Heterogenkatalysatoren beschrieben, aufgebaut aus einem Körper, der parallele durchgehende Kanäle aufweist, die unterschiedliche Heterogenkatalysatoren enthalten. Zur Herstellung dieser Arrays werden Verfahren verwendet, bei denen die Kanäle oder in den Kanälen befindliche Hilfsträger mit Katalysatormassen oder deren Vorläufern beschichtet werden. Die Beschichtung erfolgt bevorzugt mittels Ein- oder Aufbringen von Lösungen, Emulsionen oder Dispersionen von Elementen oder Elementverbindungen auf die Kanäle oder die Hilfsträger.

Dieses Verfahren zur Herstellung von Katalysatorbibliotheken zeigt im allgemeinen gute Ergebnisse bei der Herstellung von oxidischen Materialien. Bei der Herstellung von Beschichtungen in Form von Elementen kann das geschilderte Verfahren jedoch Nachteile aufweisen, da dazu in der Regel zusätzliche Reduktionsmittel verwendet werden müssen. Diese können aber teilweise, wie bei der Verwendung von hypophosphoriger Säure oder deren Salzen in unerwünschter Weise in die abgeschiedenen Metalle oder Legierungen als Verunreinigung chemisch mit eingebaut werden.

Es bestand deshalb die Aufgabe ein Verfahren zur schnellen Herstellung von großen Materialbibliotheken mit definierten Materialien, bevorzugt im elementaren Zustand, besonders bevorzugt in Form von Metallen oder Legierungen, bereitzustellen, das die geschilderten Nachteile vermeidet.

Die Aufgabe wird erfindungsgemäß gelöst durch ein Verfahren zur kombinatorischen Herstellung einer Bibliothek von Materialien durch elektrochemische Abscheidung in einem Array, gebildet aus einem Array von oben offenen Behältnissen aus elektrisch leitfähigem Material, die mit einer gemeinsamen Stromzuführung elektrisch leitend verbunden sind, und einem entsprechenden Array aus Hilfselektroden, die mit einer gemeinsamen Stromzuführung elektrisch leitend verbunden sind und so angeordnet sind, daß jeweils eine Hilfselektrode in ein Behältnis taucht oder eingeführt werden kann, ohne es zu berühren, umfassend die folgenden Schritte:
Befüllen der Behältnisse mit Elektrolyten unterschiedlicher Zusammensetzung, die elektrolytisch abscheidbare Elemente enthalten, und
Anlegen einer elektrischen Spannung zwischen den Stromzuführungen der Behältnisse und Hilfselektroden, um eine elektrolytische Abscheidung auf den Oberflächen der Behältnisse zu bewirken.

Die Aufgabe wird zudem gelöst durch ein Verfahren zur kombinatorischen Herstellung einer Bibliothek von Materialien durch elekrochemische Abscheidung in einem Array, gebildet aus einem Array von beidseitig offenen Rohren aus elektrisch leitfähigem Material, die mit einer gemeinsamen Stromzuführung elektrisch leitend verbunden sind, einem entsprechenden Array aus Hilfselektroden, die mit einer gemeinsamen Stromzuführung elektrisch leitend verbunden sind und so angeordnet sind, daß jeweils eine Hilfselektrode in ein Rohr taucht oder eingeführt werden kann, ohne es zu berühren, und einem entsprechenden Array aus Hilfselektroden-Behältnissen aus elektrisch leitfähigem Material, die mit einer gemeinsamen Stromzuführung verbunden sind und die jeweils ein Rohr umgeben, wobei kein Kontakt zwischen den Rohren einerseits und den Hilfselektroden und Hilfselektroden-Behältnissen andererseits besteht, umfassend die folgenden Schritte:
Befüllen der Hilfselektroden-Behältnisse mit Elektrolyten unterschiedlicher Zusammensetzung, die elektrolytisch abscheidbare Elemente enthalten,
Anlegen einer elektrischen Spannung zwischen der Stromzuführung der Rohre einerseits und den Stromzuführungen der Hilfselektroden und Hilfselektroden-Behältnisse andererseits, um eine elektrolytische Abscheidung auf den Oberflächen der Rohre zu bewirken.

Der Begriff "Array" bezeichnet dabei eine Anordnung aus mehreren Behältnissen, vorzugsweise 5 bis 1.000, besonders bevorzugt 10 bis 200 Behältnissen. Die geometrische Anordnung der einzelnen Behältnisse zueinander kann dabei frei gewählt werden. Beispielsweise können die Behältnisse innerhalb einer Reihe (quasi eindimensional) oder eines Schachbrettmusters (quasi zweidimensional) angeordnet sein. Sie weisen vorzugsweise definierte Abstände zueinander auf.

Die Hilfselektroden und gegebenenfalls Hilfselektroden-Behältnisse weisen die gleiche geometrische Anordnung auf wie die Behältnisse oder Rohre.

Die Materialien werden durch elektrochemische Abscheidung hergestellt.

Gerade elektrolytische Abscheideverfahren bieten eine Reihe von Möglichkeiten, mit denen Materialien im elementaren Zustand wie etwa Metalle und deren Legierungen abgeschieden werden können (vergl. Landau, U., Schriftenr. GMB 1997, 81, Elektrolyseverfahren in der Metallurgie, 29 - 52). Dabei können in Abhängigkeit vom Verfahren Schichten mit unterschiedlicher Dicke, Morphologie, Textur und Zusammensetzung abgeschieden werden (vergl. Kanani, N., Galvanotechnik 1998, 89 (10) 3267-3276), die gerade im Hinblick auf die Erzeugung von Materialbibliotheken interessante Ansätze darstellen. Neben einfachen chemischen Modifikationen der Elektrolyte, wie etwa die Variation der Konzentration und Zusammensetzung der Lösung oder die Zugabe von Fremdsalzen (Hilfselektrolyten), können gezielte Variationen der Stromstärke und Spannung zu unterschiedlichen Resultaten bei den abgeschiedenen Komponenten führen. Variationen der oben genannten Eigenschaften der abgeschiedenen Materialien können ebenfalls für die Abscheidung von Mischungen verschiedener Komponenten, wie etwa Metall-Legierungen, erzielt werden, indem man die Techniken wie bei der Pulsstromelektrolyse üblich verwendet (Kanani, N., Galvanotechnik 1998, 89 (10) 3267-3276). Hierbei wird eine zeitliche Variation der Stärke des Potentials dazu ausgenutzt, um Metalle, nicht wie bei konventionellen Elektrolyseverfahren üblich, gemäß der elektrochemischen Spannungsreihe abzuscheiden, sondern eine gleichzeitige Abscheidung unterschiedlicher Metallkomponenten als Legierung zu erzielen (z.B. Sanchez, H., J. Elektrochem. Soc. 1997, 144 (6), 2004-2012; Natter, H., Ber. Bunsen-Ges. 1997, 101 (11), 1706-1713). Die dabei erhaltenen Zusammensetzungen der Legierungen können neben den oben erwähnten Elektrolytlösungszusammensetzungen oder zusätzlichen Parametern, wie den Einsatz von Hilfselektroden oder Strömung der Elektrolytlösung auch durch Art der Pulssequenz, also Parametern wie Pulsstärke, Pulslänge und Pulsform gesteuert werden (Sanchez, H.; J. Electrochem. Soc. 1997, 144 (6), 2004-2012). Gerade diese Parameter machen das Verfahren der Pulsstromelektrolyse zu einer für die Erstellung von Materialbibliotheken interessanten Technik, da durch einfache Variation der Elektrolyseparameter andere Zusammensetzungen des Produktes erzielt werden können. Dabei können erfindungsgemäß die in der vorstehend angegebenen Literatur beschriebenen Hilfsstoffe, Verfahrensweisen und Pulssequenzen Anwendung finden.

Die Behältnisse bestehen aus elektrisch leitfähigem Material, wie Metall, C, SiC oder Si. Zur Vergrößerung der zugänglichen Oberfläche werden in vielen Fällen vorzugsweise poröse Materialien verwendet. Bevorzugt sind Behältnisse, die in einer Dimension stärker ausgedehnt sind als in der anderen, wie Rohre beliebigen Querschnitts. Diese sind im allgemeinen bei der anschließenden Elektrolyse, um ein Verschütten der eingefüllten Lösung zu vermeiden, vertikal angeordnet und an ihrem unteren Rohrende verschlossen. Der Verschluß kann derart ausgebildet sein, daß von vorneherein ein einseitig geschlossenes Rohr als Behältnis verwendet wird, oder alternativ ein üblicher Stopfen aus einem geeigneten Material verwendet wird. Nach dem Beschichten wird das verschlossene Rohrende z.B. durch Absägen entfernt oder der verwendete Stopfen durch Herausdrehen oder Herausziehen wieder entfernt.

Um die Behältnisse, bevorzugt Rohre gemäß einer Ausführungsform der Erfindung nicht nur auf ihrer zur Hilfselektrode gewandten Innenseite zu beschichten, sondern auch auf ihrer Außenseite, werden die Rohre bevorzugt in ein Hilfselektroden-Behältnis gestellt, und auch der Zwischenraum zwischen Hilfselektroden-Behältnis und Rohraußenseite wird mit der zu elektrolysierenden Lösung gefüllt. Dies hat außerdem den Vorteil, daß im Falle von porösen Behältnismaterialien keine Lösung aus dem Inneren der Behältnisse nach außen entweichen und damit verlorengehen kann. In diesem Fall sind die verwendeten Rohre beidseitig offen. Zudem werden auch Hilfselektroden-Behältnisse miteinander elektrisch leitend verbunden und mit gleichem Potential beaufschlagt wie die in die zu beschichtenden Rohre eingeführten Hilfselektroden. Dies wird in der Weise durchgeführt, daß die Innen- und Außenseite der Rohre bevorzugt mit gleicher Schichtdicke und Schichtqualität beschichtet werden.

Die Elektrolyt-Lösung enthält die Elemente, die später bevorzugt in elementarer Form abgeschieden werden sollen, in gelöster Form. Die Konzentration und das Verhältnis der eingesetzten Elemente in der Lösung ist auf die Zusammensetzung der abzuscheidenden Legierung abgestimmt. Die elektrolytisch abzuscheidenden Elemente sind die allgemein verwendbaren Metalle und Halbmetalle. Beispiele sind Pd, Pt, Cu, Co, Ni, Fe, Cr, Cd, Zn, Ru, Ir, Ag, Au. Je nach elektrochemischem Potential können sie in Wasser oder organischen Lösungsmitteln wie Alkoholen oder DMSO eingesetzt werden.

Die Konzentration der im Elektrolyten gelösten abzuscheidenden Salze oder Elemente liegt in üblichen Bereich von verdünnten Lösungen bis zur Löslichkeitsgrenze. Auch Gegenionen und Additive werden entsprechend gewählt. Dabei wird in der Regel mit einem wäßrigen Elektrolyten gearbeitet. Zusätzlich kann die Lösung, wie bei elektrochemischen Abscheidungen üblich, eine Reihe von zusätzlichen Komponenten oder Additive, z.B. Komplexbildner und/oder Leitsalze enthalten, die dazu dienen, die Abscheidegeschwindigkeit in geeigneter Weise zu beeinflussen und die abgeschiedene Schichtqualität hinsichtlich homogener Zusammensetzung, Fehlerfreiheit und Oberflächenglätte, d.h. Glanz, zu verbessern. Sie sind beispielsweise in der vorstehend angegebenen Literatur beschrieben. Bevorzugt werden die Lösungen auf weitgehend automatisiertem Wege hergestellt, z.B. anhand der DE-A-198 55 894 beschriebenen Verfahren.

Vorzugsweise werden die Elektrolyten mit unterschiedlicher Zusammensetzung automatisiert hergestellt durch Vermischen vorbestimmter Mengen von Lösungen der elektrolytisch abscheidbaren Elemente in einem oder mehreren parallel betriebenen Mischgefäßen und anschließendes Überführen in vorbestimmte Behältnisse des Arrays.

Der Begriff "vorbestimmt" bedeutet, daß beispielsweise eine Reihe unterschiedlicher Elektrolyte derart in die Behältnisse eingebracht wird, daß die Zuordnung der unterschiedlichen Elektrolyten zu den einzelnen Behältnissen aufgezeichnet wird und später beispielsweise bei der Bestimmung der Eigenschaften der abgeschiedenen Materialien abgerufen werden kann, um eine eindeutige Zuordnung für bestimmte Untersuchungsergebnisse zu bestimmten Materialzusammensetzungen zu ermöglichen. Bevorzugt erfolgt die Herstellung und Verteilung der Elektrolytlösungen auf die unterschiedlichen Behältnisse rechnergesteuert, wobei die jeweilige Zusammensetzung eines Elektrolyts und die Position im Behältnis im Computer gespeichert wird und später abgerufen werden kann. Der Begriff "vorbestimmt" dient damit der Unterscheidung gegenüber einer zufälligen oder statistischen Verteilung der im allgemeinen unterschiedlichen Elektrolytlösungen auf die unterschiedlichen Behältnisse.

Es können auch Lösungen der elektrolytisch abscheidbaren Elemente in getrennten Vorratsgefäßen hergestellt werden. Sodann werden vorbestimmte Mengen der vorbestimmten Lösungen gleichzeitig oder aufeinanderfolgend in die einzelnen Behältnisse dosiert. Bei dieser Vorgehensweise kann die Dosierung beispielsweise mit einem Inkjet erfolgen, ein entsprechendes Verfahren ist in WO 96/11878 oder in der US 5,449,754 beschrieben. Die Herstellung kann auch beispielsweise automatisiert mit Hilfe eines Pipetierautomaten oder Pipetierrobotors erfolgen.

Die Vorrichtung, die dazu führt, daß alle Behältnisse einen gemeinsamen elektrischen Kontakt aufweisen, ist vorzugsweise so ausgebildet, daß die bei der späteren Elekrolyse auftretenden elektrischen Felder von ihrer Richtung und Stärke her weitgehend homogen sind und somit ein hinsichtlich Schichtdicke und Schichtqualität gleichmäßige Beschichtung in allen Behältnissen ermöglichen.

Die Hilfselektrode ist vorzugsweise so ausgebildet, daß die bei der späteren Elektrolyse auftretenden elektrischen Felder von ihrer Richtung und Stärke weitgehend homogen sind und somit eine hinsichtlich Schichtdicke und Schichtqualität gleichmäßige Beschichtung in allen Behältnissen ermöglichen. Bei der Beschichtung von rohrförmigen Behältnissen werden bevorzugt stab- oder rohrförmige Elektroden verwendet.

Dazu können die Behältnisse, die Hilfselektroden und die Hilfselektroden-Behältnisse wie auch die Rohre beliebige geeignete Geometrien aufweisen. Beispielsweise kann ein einseitig verschlossenes rohrförmiges Behältnis mit einem kreisförmigen Querschnitt eine im Kreismittelpunkt stehende stab- oder rohrförmige Hilfselektrode aufweisen, die bis in die Nähe des Behälterbodens ragt. Ähnliches gilt beim zusätzlichen Einsatz eines Hilfselektroden-Behältnisses. Hierzu können ein einseitige geschlossenes rohrförmiges Hilfselektroden-Behältnis, ein Rohr mit kreisförmigem Querschnitt und die Hilfselektrode konzentrisch angeordnet sein. Die Abstände zwischen der Hilfselektrode, dem Rohr oder Behältnis und dem Hilfselektroden-Behältnis werden dabei vorzugsweise so gewählt, daß an allen Stellen nach Einfüllen des Elektrolyten gleiche Potentialdifferenzen bestehen.

Eine Kombination aus Hilfselektrode und Hilfselektroden-Behältnis kann auch so aufgebaut sein, daß ein einseitig geschlossenes Rohr als Hilfselektroden-Behältnis verwendet wird, wobei die Hilfselektrode zentriert am Rohrboden des Hilfselektroden-Behältnisses elektrisch leitend fixiert ist und zentriert in das Behältnis ragt. In dem Zwischenraum zwischen zentrierter Hilfselektrode und Hilfselekroden-Behältnis wird dann da Rohr angeordnet, beispielsweise eingehängt.

Vorzugsweise haben die Hilfselekrode und das Hilfselektroden-Behältnis das gleiche Potential, d.h. die Arrays aus Hilfselektroden und Hilfselektroden-Behältnissen weisen eine gemeinsame Stromzuführung auf.

Das gesamte Array zur elektrochemischen Abscheidung weist damit eine Mehrzahl parallel geschalteter Elektrolysezellen auf. Es ist erfindungsgemäß auch möglich, jeweils mehrere Elektrolysezellen hintereinander zu schalten, wobei diese Reihen von Elektrolysezellen dann jeweils parallel geschaltet sind. Vorzugsweise sind jedoch alle Elektrolysezellen parallel geschaltet. Es ist auch möglich, nicht sämtliche Hilfselektroden oder sämtliche Behältnisse derart zu verbinden und auf ein Potential zu bringen, sondern es können auch Teilmengen der Hilfselektroden oder Behältnisse auf ein Potential gebracht werden. Es ist dann beispielsweise möglich, eine Mehrzahl unterschiedlicher Elektrolytlösungen. bei unterschiedlichen Potentialdifferenzen abzuscheiden, um die so erhaltenen Materialien miteinander vergleichen zu können.

Da bei dem erfindungsgemäßen Verfahren bevorzugt Bibliotheken von Stoffen in ihrer elementaren Form, d.h. insbesondere Metalle und Legierungen, abgeschieden werden sollen, ist das angelegte Potential, bzw. die angelegte Spannung vorzugsweise so ausgebildet, daß die Behältnisse die Kathode bilden und die Hilfselektrode als Anode fungiert. In einigen Fällen ist es zweckmäßig, als Anode sogenannte Opferanoden einzusetzen. In bestimmten Fällen lassen sich mit dem erfindungsgemäßen Verfahren aber auch nichtelementare Stoffe, z.B. Oxide, elektrolytisch abscheiden. In diesem Fall werden die Behältnisse als Anode und die Hilfselektroden entsprechend als Kathode geschaltet. Das angelegte Potential ist entsprechend der Nemstschen Gleichung davon abhängig, welche Elemente in welcher Konzentration über die Elektrolysezeit abgeschieden werden sollen. In der Regel ist das angelegte Potential über die Zeit konstant. Bei der Abscheidung von Legierungen hat sich besonders das Verfahren des Pulsplating (Pulsstromelektrolyse) bewährt, bei dem eine über die Zeit variierende elektrische Spannung an den Elektroden angelegt wird. Bei den erwähnten Pulsstromelektrolyseverfahren wird kein kontinuierlicher Stromfluß in der Elektrolysezelle umgestellt, sondern ein zeitlicher Potentialgradient als periodischer Rechteck-, Sinusoidal- oder andersartiger Puls an die Zelle angelegt. Durch diese Technik ist es möglich, auch Mehrkomponentenlegierungen gleichzeitig abzuscheiden. Durch die Variation der Pulsparameter, wie Pulslänge, Pulsstärke, Umkehrpulse, Überlagerung von Pulssequenzen ist es möglich, die Zusammensetzung abgeschiedener Legierungen und andere Faktoren wie die Oberflächenmorphologie oder die Gefügestruktur zu steuern. Dabei wird bevorzugt wie in der vorstehend angegebenen Literatur beschrieben vorgegangen.

Ein Verfahren zur kombinatorischen Testung von Bibliotheken von Materialien, die nach dem erfindungs gemäßen Verfahren zur Herstellung von Materialbibliotheken erhalten wurden, ist ein verfahren bei dem
(1) beim Vorlegen von Behältnissen die Materialien in beidseitig offene Rohre überführt werden, und die Rohre als Katalysatoren in unterschiedliche Kanäle eines Körpers eingeführt werden, der eine Mehrzahl paralleler durchgehender Kanäle aufweist,
(2) gegebenenfalls Aktivieren der Katalysatoren im Körper,
(3) Temperieren des Körpers auf eine gewünschte Umsetzungstemperatur,
(4) Leiten eines fluiden Reaktanten oder eines fluiden Reaktionsgemisches durch Kanäle des Körpers,
(5) Austrag der umgesetzten Fluide aus einzelnen oder mehreren zusammengefaßten Kanälen des Körpers,
(6) Analyse der ausgetragenen umgesetzten Fluide,
(7) gegebenenfalls vergleichende Auswertung der Analysenergebnisse mehrerer Analysen.

Dabei können nach dem Temperieren des Körpers auf eine erste Umsetzungstemperatur in Schritt (3) die Schritte (4) bis (7) nacheinander für mehrere unterschiedliche fluide Reaktanten oder fluide Reaktionsgemische durchgeführt werden, wobei jeweils ein Spülschritt mit einem Spülgas eingefügt werden kann, und anschließend der Körper auf eine zweite Umsetzungstemperatur temperiert werden kann und die vorstehenden Umsetzungen bei dieser Temperatur wiederholt werden können.

Die Begriffe "Körper" und "Kanal" sind dabei wie in DE-A-198 55 894 definiert. Beim Körper kann es sich beispielsweise um einen Rohrbündelreaktor oder Wärmetauscher mit einer Vielzahl zueinander paralleler Rohre handeln. Der Körper kann jedoch auch ein Block aus einem Massivmaterial sein, der die Kanäle in Form von Bohrungen aufweist. Geeignete Geometrien sind ebenfalls in der DE-A-198 55 894 beschrieben.

Zur Untersuchung geeignete Reaktionen bzw. Umsetzungen sind beispielsweise in G. Ertl, H. Knözinger, J. Weitkamp, Herausgeber "Handbook of Heterogenious Catalysis, Weley-VCH, Weinheim 1997 beschrieben. Beispiele geeigneter Reaktionen sind vornehmlich in dieser Literaturstelle in den Bänden 4 und 5 unter den Ziffern 1, 2, 3 und 4 aufgeführt.

Beispiele geeigneter Reaktionen sind zudem in der DE-A-198 55 894 aufgeführt. Insbesondere handelt es sich bei den erfindungsgemäß hergestellten Materialien um Katalysatoren für de Zersetzung von Stickoxiden, die Ammoniaksynthese, die Ammoniak-Oxidation, Oxidation von Schwefelwasserstoff zu Schwefel, Oxidation von Schwefeldioxid, Direktsynthese von Methylchlorsilanen, Ölraffination, Oxidative Kopplung von Methan, Methanolsynthese, Hydrierung von Kohlenmonoxid und Kohlendioxid, Umwandlung von Methanol in Kohlenwasserstoffe, katalytische Reformierung, katalytisches Cracken und Hydrocracken, Kohlevergasung und -verflüssigung, Brennstoffzellen, heterogene Photokatalyse, Synthese von MTBE und TAME, Isomerisierungen, Alkylierungen, Aromatisierungen, Dehydrierungen, Hydrierungen, Hydrofonnylierungen, selektive bzw. partielle Oxidationen, Aminierungen, Halogenierungen, nukleophile aromatische Substitutionen, Additions- und Eliminierungsreaktionen, Oligomerisierungen und Metathese, Polymerisationen, enantioselektive Katalyse und biokatalytische Reaktionen.

Die Testung der Materialien/Katalysatoren im die Kanäle aufweisenden Körper erfolgt vorzugsweise durch Umsetzung von fluiden Reaktanten oder Reaktionsgemischen, die in der Regel flüssig oder bevorzugt gasförmig vorliegen. Dabei werden bei einer vorgewählten Temperatur Reaktionsgasgemische durch die Rohre geführt, wobei in der Regel alle Rohre gleichzeitig von der Gasmischung durchströmt werden.

Die Ableitung der einzelnen Reaktionsgase aus dem Körper kann über eine auf den Rohrbündelreaktor im wesentlichen gasdicht aufgesetzte Vorrichtung erfolgen, wobei die einzelnen Reaktionsgase der einzelnen, mehrerer oder aller Reaktionsrohre separat abgeleitet und über eine Ventilschaltung anschließend separat analysiert werden. Eine andere Art, die einzelnen Abgase der jeweiligen im allgemeinen unterschiedlich beschichteten Reaktionsrohre separat abzuleiten, besteht in einer zum Beispiel computergesteuert mechanisch bewegten "Schnüffelvorrichtung" mit einer Schnüffelleitung für das zu entnehmende Gas, die im wesentlichen automatisch auf, in oder über dem Ausgang des jeweiligen Reaktionsrohres positioniert wird und anschließend eine Reaktionsgasprobe entnimmt.

Das Screening der katalytischen Leistung der einzelnen katalytischen Beschichtungen der einzelnen Reaktionsrohre kann durch chemische Analyse der jeweiligen Gasströme mittels geeigneter, an sich bekannter Methode erfolgen. Die Probenahme und die Analyse der Reaktionsgase sind ebenfalls in der DE-A-198 55 894 beschrieben.

Das erfindungsgemäße Verfahren erlaubt die Herstellung von großen Materialbibliotheken mit definierten, vorzugsweise metallischen Materialien, die durch andere Verfahren nicht in dieser Weise zugänglich sind.

## Patentansprüche

1. Verfahren zur kombinatorischen Herstellung einer Bibliothek von Materialien durch elektrochemische Abscheidung in einem Array, gebildet aus einem Array von oben offenen Behältnissen aus elektrisch leitfähigem Material, die mit einer gemeinsamen Stromzuführung elektrisch leitend verbunden sind, und einem entsprechenden Array aus Hilfselektroden, die mit einer gemeinsamen Stromzuführung elektrisch leitend verbunden sind und so angeordnet sind, daß jeweils eine Hilfselektrode in ein Behältnis taucht oder eingeführt werden kann, ohne es zu berühren, umfassend die folgenden Schritte:
Befüllen der Behältnisse mit Elektrolyten unterschiedlicher Zusammensetzung, die elektrolytisch abscheidbare Elemente enthalten, und
Anlegen einer elektrischen Spannung zwischen den Stromzuführungen der Behältnisse und Hilfselektroden, um eine elektrolytische Abscheidung auf den Oberflächen der Behältnisse zu bewirken.

2. Verfahren zur kombinatorischen Herstellung einer Bibliothek von Materialien durch elekrochemische Abscheidung in einem Array, gebildet aus einem Array von beidseitig offenen Rohren aus elektrisch leitfähigem Material, die mit einer gemeinsamen Stromzuführung elektrisch leitend verbunden sind, einem entsprechenden Array aus Hilfselektroden, die mit einer gemeinsamen Stromzuführung elektrisch leitend verbunden sind und so angeordnet sind, daß jeweils eine Hilfselektrode in ein Rohr taucht oder eingeführt werden kann, ohne es zu berühren, und einem entsprechenden Array aus Hilfselektroden-Behältnissen aus elektrisch leitfähigem Material, die mit einer gemeinsamen Stromzuführung verbunden sind und die jeweils ein Rohr umgeben, wobei kein Kontakt zwischen den Rohren einerseits und den Hilfselektroden und Hilfselektroden-Behältnissen andererseits besteht, umfassend die folgenden Schritte:
Befüllen der Hilfselektroden-Behältnisse mit Elektrolyten unterschiedlicher Zusammensetzung, die elektrolytisch abschaltbare Elemente enthalten,
Anlegen einer elektrischen Spannung zwischen der Stromzuführung der Rohre einerseits und den Stromzuführungen der Hilfselektroden und Hilfselektroden-Behältnisse andererseits, um eine elektrolytische Abscheidung auf den Oberflächen der Rohre zu bewirken.

3. Verfahren nach Anspruch 1 oder 2, **dadurch gekennzeichnet, daß** eine Pulsstromelektrolyse durchgeführt wird.

4. Verfahren nach einem der Ansprüche 1 bis 3, **dadurch gekennzeichnet, daß** die Elektrolyten mit unterschiedlicher Zusammensetzung automatisiert hergestellt werden durch Vermischen vorbestimmter Mengen von Lösungen der elektrolytisch abscheidbaren Elemente in einem oder mehreren parallel betriebenen Mischgefäßen und anschließendes Überfahren in die Behältnisse des Arrays.

5. Verfahren nach einem der Ansprüche 1 bis 3, **dadurch gekennzeichnet, daß** die Elektrolyten mit unterschiedlicher Zusammensetzung automatisch hergestellt werden durch Herstellen von Lösungen der elektrolytisch abscheidbaren Elemente in getrennten Vorratsgefäßen und gleichzeitige oder aufeinanderfolgende Dosierung vorbestimmter Mengen der vorbestimmten Lösungen in die einzelnen Behältnisse.

## Claims

1. A process for combinatorial preparation of a material library by electrochemical deposition in an array which is formed of an array of open-top containers of electrically conducting material that are electrically connected to a shared power supply and a corresponding array of auxiliary electrodes which are electrically connected to a shared power supply and are disposed in such a manner that in each case one auxiliary electrode immerses in, or can be introduced into, a container without contacting it, comprising the following steps:
filling the containers with electrolytes of differing composition which contain electrolytically depositable elements and
applying an electric voltage between the power supplies of the containers and auxiliary electrodes in order to cause electrolytic deposition on the surfaces of the containers.

2. A process for combinatorial preparation of a material library by electrochemical deposition in an array formed of an array of tubes made of electrically conducting material which are open at both ends and are electrically connected to a shared power supply, a corresponding array of auxiliary electrodes which are electrically connected to a shared power supply and are disposed in such a manner that in each case one auxiliary electrode immerses in or can be introduced into a tube without contacting it, and a corresponding array of auxiliary electrode containers made of electrically conducting material which are connected to a shared power supply and which each enclose one tube, in which case there is no contact between the tubes on the one hand and the auxiliary electrodes and auxiliary electrode containers on the other, which process comprises the following steps:
filling the auxiliary electrode containers with electrolytes of differing composition that contain electrolytically disconnectable elements,
applying an electric voltage between the power supply of the tubes on the one hand and the power supplies of the auxiliary electrodes and auxiliary electrode containers on the other in order to cause electrolytic deposition on the surfaces of the tubes.

3. The process as claimed in claim 1 or 2, **characterized in that** pulsed electrolysis is used.

4. The process as claimed in one of claims 1 to 3, **characterized in that** the electrolytes of differing composition are prepared in an automated manner by mixing predetermined amounts of solutions of the electrolytically depositable elements in one or more mixing vessels operated in parallel and subsequently transferring them into the containers of the array.

5. The process as claimed in one of claims 1 to 3, **characterized in that** the electrolytes of differing composition are prepared in an automated manner by preparing solutions of the electrolytically depositable elements in separate storage vessels and simultaneously or sequentially metering predetermined amounts of the predetermined solutions into the individual containers.

## Revendications

1. Procédé pour la production combinatoire d'une bibliothèque de matériaux par déposition électrochimique dans un module, constitué d'un module de conteneurs ouverts par le haut formés de matériau électriquement conducteur, qui sont reliés de manière électriquement conductrice avec une arrivée de courant commune, et d'un module correspondant d'électrodes de secours qui sont reliées de manière électriquement conductrice avec une arrivée de courant commune et qui sont agencées de telle sorte que respectivement une électrode de secours plonge ou puisse être introduite dans un conteneur, sans le toucher, comprenant les étapes suivantes :
le remplissage des conteneurs avec des électrolytes de compositions différentes qui contiennent des éléments déposables électrolytiquement, et
la mise en place d'une tension électrique entre les arrivées de courant des conteneurs et des électrodes de secours, pour entraîner une déposition électrolytique sur la surface des conteneurs.

2. Procédé pour la production combinatoire d'une bibliothèque de matériaux par déposition électrochimique dans un module, constitué d'un module de tuyaux ouverts des deux côtés en matériau électriquement conducteur, qui sont reliés de manière électriquement conductrice avec une arrivée de courant commune, d'un module correspondant d'électrodes de secours qui sont reliées de manière électriquement conductrice avec une arrivée de courant commune et qui sont agencées de telle sorte que respectivement une électrode de secours plonge dans un tuyau ou puisse y être introduite sans le toucher, et d'un module correspondant constitué de conteneurs d'électrodes de secours en matériau électriquement conducteur, qui sont reliés avec une arrivée de courant commune et qui entourent respectivement un tuyau, aucun contact n'existant entre les tuyaux d'une part et les électrodes de secours et les conteneurs des électrodes de secours d'autre part, comprenant les étapes suivantes :
le remplissage des conteneurs des électrodes de secours avec des électrolytes de composition différente qui contiennent des éléments déposables électrolytiquement,
la mise en place d'une tension électrique entre l'arrivée de courant du tuyau d'une part et les arrivées de courant des électrodes de secours et des conteneurs des électrodes de secours, d'autre part, pour entraîner un dépôt électrolytique sur la surface des tuyaux.

3. Procédé selon la revendication 1 ou 2,
**caractérisé en ce qu'**une électrolyse par courant à impulsions est réalisée.

4. Procédé selon les revendications 1 à 3,
**caractérisé en ce que** les électrolytes de compositions différentes sont fabriqués de manière automatisée par mélange de quantités prédéterminées de solutions des éléments déposables électrolytiquement dans un ou plusieurs mélangeurs actionnés en parallèle et ensuite, par leur transfert dans les conteneurs du module.

5. Procédé selon les revendications 1 à 3,
**caractérisé en ce que** les électrolytes de compositions différentes sont fabriqués de manière automatique par la production de solutions des éléments déposables électrolytiquement dans des réservoirs de stockage séparés et le dosage concomitant ou consécutif de quantités prédéterminées de solutions prédéterminées dans les conteneurs individuels.
